(19) **Europäisches Patentamt / European Patent Office / Office européen des brevets**

(11) **EP 1 926 029 A1**

(12) # EUROPEAN PATENT APPLICATION

(43) Date of publication:
**28.05.2008 Bulletin 2008/22**

(51) Int Cl.:
**G06F 17/30** (2006.01)

(21) Application number: **07108683.9**

(22) Date of filing: **22.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **24.11.2006 CN 200610162838**

(71) Applicant: **Taiwan Chest Disease Association 333 Taoyuan County (TW)**

(72) Inventors:
• **Kuo, Han-Pin**
  **Taoyuan County 333 (TW)**
• **Liu, Wen-Te**
  **Taoyuan County 333 (TW)**

(74) Representative: **Viering, Jentschura & Partner**
  **Grillparzerstrasse 14**
  **81675 München (DE)**

Remarks:
Amended claims in accordance with Rule 137(2) EPC.

(54) **Method and system for automatically selecting music for a patient training at home**

(57)     A method and a system using the same for automatically selecting music for a patient to exercise at home following proper tempo music without supervising are disclosed. The method comprises: receiving at least one initial physical data of the patient; generating a basic tempo music according to the at least one initial physical data; providing a plurality of music with different tempo according to the basic tempo music; receiving at least one exercise data of the patient including an exercise time (or duration) of the patient exercising following the basic tempo; and automatically selecting one of the plurality of music according to the at least one exercise data for the patient to exercise following the selected tempo music.

FIG. 3

EP 1 926 029 A1

**Description**

**Background of the Invention**

**1. Field of the Invention**

The present invention relates to a method and a system for automatically selecting music, particularly, to a method and a system using the same for home-based exercise training guided by automatically assessment and selecting music.

**2. Description of the Prior Art**

Before 1992, the general medical system thought that "exercise" might hurt a patient especially the patient who has the heart or lung related disease. Therefore, in the early days, exercise assessment is applied on athletes only. However, till 1992, "Shuttle Walking Test" was developed for assessing a patient as one of the "rehabilitation systems". In general, the exercise strength is based on the oxygen consumption. And, according to the traditional information, it can be understood that the oxygen consumption is proportional to the speed of the exercise. Accordingly, in a hospital, a patient can be assessed by his/her exercise such as walking distance and time.

In short, Shuttle Walking Test is used for a patient to walk a designated distance (such as 10 meters) back and forth until the patient can't go any more (for example, can't breath smoothly (dyspnea)). Then, a max speed (a max exercise strength) of the walker (the patient) can be recorded under supervision of a medical person. According to some factors such as the max speed, physical data (height, weight, age, and sex), etc, a doctor may preset a proper exercise speed (such as the 80% of the max exercise strength) for the patient to walk (exercise) continuously for rehabilitation.

Continuously rehabilitation of the patient can provide some useful information for the doctor to diagnose. For example, the doctor may change the prescription or the dosage according to the exercise status of the patient. Furthermore, the patient may be recovered according to such rehabilitation system, and thus, the medical sources can be reduced. The traditional rehabilitation system requires the patient to exercise in the hospital, i.e. the patient relies on the supervision assistance of the medical persons. For example, the exercise strength of the patient needs to be supervised under the medical person. Hence, the rehabilitation for the patient is not only relied on the manpower of the hospital, but also relied on the motivation of the patient to come to the hospital.

For the chronic patient such as asthma, diabetes or hypertension, continuously monitoring his/her status can efficiently prevent sudden aggravation. The chronic patient cannot only rely on receiving medical suggestion in the clinical return visit periodically (such as every four to twelve weeks). The periodically outpatient clinical services or the long-period prescription can only provide passive defenses, instead of active controlling by doctors or medical system for any possible serious situation of the patient. In addition, periodically outpatient services can't distribute the medical sources efficiently. Moreover, when the patient sees the doctor for clinical return visit, he/she maybe not having any aggravation symptom. Thus, the doctor could not provide an efficient therapy.

Therefore, there is a need of rehabilitation system for the patient to assess his/her own disease. Because the patient can automatically assess his/her own disease and the medical system can synchronously get the assessment, the medical sources can be distributed efficiently. Furthermore, it can achieve the objection of recovering the patient.

**Summary of the Invention**

One aspect of the present invention is to solve the above-mentioned problem. Therefore, the present invention provides a method and a system using the same for home-based exercise training guided by automatically assessment and selecting music. Furthermore, it can efficiently distribute the medical source.

The method of automatically selecting music according to the present invention is adopted to selectively provide proper tempo music to a patient without any supervision, wherein the proper tempo music is used for the patient to exercise according to the tempo of the proper tempo music. The method comprises: receiving at least one initial physical data of the patient; generating a basic tempo music according to the at least one initial physical data; providing a plurality of music with different tempo according to the basic tempo music; receiving at least one exercise data of the patient including an exercise time (or duration) of the patient exercising following the basic tempo; and automatically selecting one of the plurality of music according to the at least one exercise data for the patient to exercise following the selected tempo music.

Preferably, the method of this invention may further comprise storing the at least one exercise data.

In addition, the system of automatically selecting music according to the present invention is adopted to selectively provide proper tempo music to a patient without any supervision, wherein the proper tempo music is used for the patient to exercise according to the tempo of the proper tempo music. The system comprises an exercise status database, a control unit, and a playing apparatus. The exercise status database stores at least one exercise data of the patient. The control unit is connected with the exercise status database for automatically selecting a proper music instruction based on the exercise data. The playing apparatus stores with a plurality of music with different tempo. The playing apparatus receives the selected proper music instruction to selectively play one of the pluralities of music with a specific tempo for the patient to exercise following the specific tempo. Furthermore, the playing apparatus may generate and transmit the at least one exercise data to the control unit. For example, it may transmit the exercise data (including exercise time (or duration), dyspnea rating data, or the patient's heart rate). Therefore, after obtaining the exercise data, when the patient is going to exercise on the next day of the exercise data obtaining, the control unit transmits the proper music instruction based on the exercise data to the playing apparatus for selectively playing one of the pluralities of music with the specific tempo for the patient to exercise following the specific tempo.

**Brief Description of the Drawings**

FIG. 1 illustrates a system architecture diagram of a system for home-based exercise training guided by automatically assessment and selecting music in accordance with an embodiment of the present invention.

FIG. 2A and FIG. 2B show surveys for the exercise data and physical state data of the patient in accordance with a system for home-based exercise training guided by automatically assessment and selecting music of the present invention.

FIG. 3 shows a process flow chart of a method for home-based exercise training guided by automatically assessment and selecting music of the present invention.

**Detailed Description of the Invention**

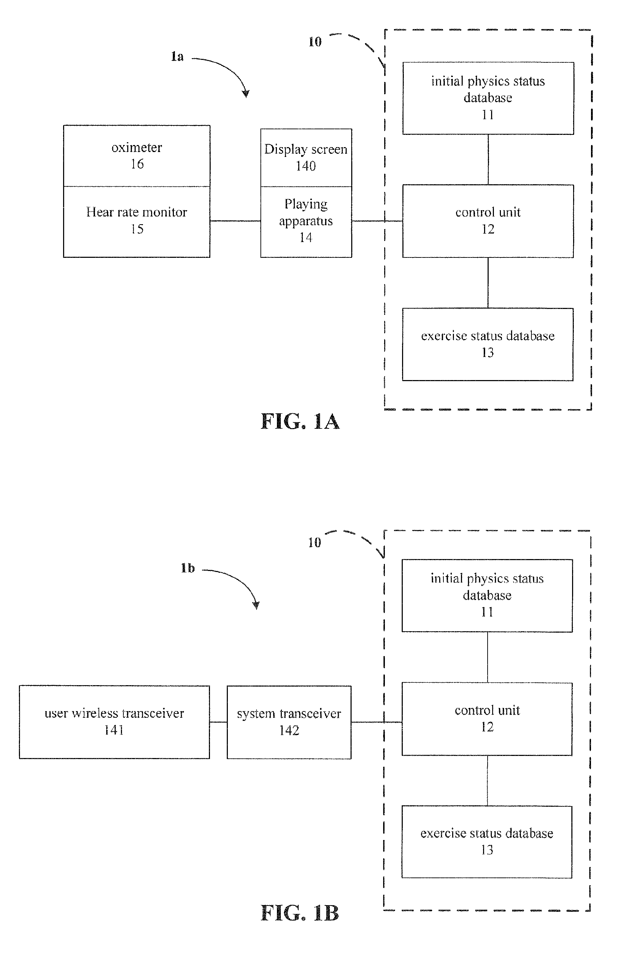

Please referring to FIG. 1A, a system for home-based exercise training (such as walk training) guided by automatically assessment and selecting music for a patient (such as a chronic disease patient) according to an embodiment of the present invention is illustrated. The system 1a according to the present invention comprises an exercise status database 13, a control unit 12, and a playing apparatus 14. Preferably, the system 1a further comprises an initial physical status database 11, a heart rate monitor 15, and/or an oximeter 16. For example, a portable heartbeat oximeter can be put on the patient's finger for measuring his/her heart rate or oxyhemoglobin and deoxygenated hemoglobin in blood, thus the heart rate monitor 15 and the oximeter 16 can be combined as one portable heartbeat oximeter. The playing apparatus 14 may preferably have function of General Packet Radio Service (GPRS), Global System for Mobile Communication (GSM), Wireless Local Area Network (WLAN), or the like.

The patient can be tested for his/her level (speed) and steps per shuttle (initial physical data of the patient) for initializing the walking test in the hospital. For example, at first, the patient walks to and fro in a specific distance shuttles with a specific tempo until the patient cannot walk any more (such as the patient cannot follow the tempo to walk and not breath smoothly). Then, the number of the steps and speed of the patient can be measured, and thus his/her maximum intensity of exercise (walking speed) can be obtained. For example, a doctor can set a level for the patient from TABLE 1, for example according to 80% of the maximum intensity. The TABLE 1 is a corresponding level according to a conventional shuttle walking test (as shown in below of conventional table). The TABLE 1 has modified some differential speed to a specific value (such as 0.25/hr) for simplifying the calculation. Those people skilled in this art will be understood that the levels of the Shuttle Walking Test is graded for different speed from slow to fast as an index.

**Conventional Table for shuttle walking test**

| 10m shuttle walking test - 60s increments | | | | | | | |
|---|---|---|---|---|---|---|---|
| | Speed | | | | No. of shuttles | | Distance |
| level | m/s | km/h | mph | time/shuttle(s) | level | total | m |
| 1 | 0.50 | 1.80 | 1.12 | 20.00 | 3 | 3 | 30 |
| 2 | 0.67 | 2.41 | 1.50 | 15.00 | 4 | 7 | 70 |
| 3 | 0.84 | 3.03 | 1.88 | 12.00 | 5 | 12 | 120 |
| 4 | 1.01 | 3.63 | 2.26 | 10.00 | 6 | 18 | 180 |
| 5 | 1.18 | 4.2.5 | 2.64 | 8.57 | 7 | 25 | 250 |

(continued)

| 10m shuttle walking test - 60s increments | | | | | | | |
|---|---|---|---|---|---|---|---|
| | Speed | | | | No. of shuttles | | Distance |
| level | m/s | km/h | mph | time/shuttle(s) | level | total | m |
| 6 | 1.35 | 4.86 | 3.02 | 7.50 | 8 | 33 | 330 |
| 7 | 1,52 | 5.47 | 3.40 | 6.67 | 9 | 42 | 420 |
| 8 | 1.69 | 6.08 | 3.78 | 6.00 | 10 | 52 | 520 |
| 9 | 1.86 | 6.69 | 4.16 | 5.46 | 11 | 63 | 630 |
| 10 | 2.03 | 7.31 | 4.54 | 5.00 | 12 | 75 | 750 |
| 11 | 2.20 | 7.92 | 4.92 | 4.62 | 13 | 88 | 880 |
| 12 | 2.37 | 8.53 | 5.30 | 4.29 | 14 | 102 | 1020 |
| Total number of shuttles = total number of shuttles completed at the END of that level e.g. 6 completed levels = 33 shuttles. | | | | | | | |

### TABLE 1

| Level | Speed (km/hr) | time /per shuttle (Sec.) | Level | Speed (km/hr) | time /per shuttle (Sec.) |
|---|---|---|---|---|---|
| 1 | 2.25 | 16.000 | 9 | 4.25 | 8.471 |
| 2 | 2.50 | 14.400 | 10 | 4.50 | 8.000 |
| 3 | 2.75 | 13.091 | 11 | 4.75 | 7.579 |
| 4 | 3.00 | 12.000 | 12 | 5.00 | 7.200 |
| 5 | 3.25 | 11.077 | 13 | 5.25 | 6.857 |
| 6 | 3.50 | 10.286 | 14 | 5.50 | 6.545 |
| 7 | 3.75 | 09.600 | 15 | 5.75 | 6.261 |
| 8 | 4.00 | 09.000 | 16 | 6.00 | 6.000 |
| (per shuttle = 10 meters) | | | | | |

For example, if the patient his maximum intensity is measured as 4.86 km/hr, and he walks 16 steps per shuttle (average). Then, 80% of the maximum intensity is 3.78 km/hr, and as shown in TABLE 1, it falls in Level 7.

The initial physical status data (such as the above measurement of the level and steps) of the patient can be further stored in the initial physical status database 11. The control unit 12 is connected with the exercise status database 13 and the initial physical status database 11 respectively. Furthermore, according to the physical status data in the initial physical status database 11, the control unit 12 can calculate for a proper tempo for the patient to exercise by following the proper tempo. The control unit 12 can first provide a basic music instruction. For example, the control unit 12 can calculate the required tempo for the patient according to the following formula 1.

Formula 1

$$\frac{\left(\dfrac{level + 8}{4}\right) * \dfrac{1000}{60}}{10 / step}$$

wherein the level is looked up in TABLE 1, and the step is the number steps of the patient walked in one shuttle.

In the above example, the patient is in Level 7, and walking step is 16 steps per shuttle. According to the Formula 1, it can get the result of 100 beats per minute (tempo). Therefore, according the basic tempo, a plurality of music with different tempos, such as per minute 90 beats, 100 beats, 105 beats... etc, can be stored in the playing apparatus 14. In order to have simplified calculation, the music with different tempos stored in the playing apparatus 14 can be differenced with same beats (such as 5 beats); however, it is not used to limit the present invention, which may have variety differentials for tempos.

For example, the control unit 12 provides the basic music instruction of 100 beats to the playing apparatus 14. In another word, for the first time that the patient uses the playing apparatus 14 is to play the music with a basic tempo (such as 100 beats) based on the basic music instruction. The patient exercises following the tempo (such as 100 beats) of the music until he/she cannot follow the tempo (or cannot breath smoothly).

The exercise status data may further comprise time data, heart rate data, the dyspnea rating data, or the like.

When the patient starts to play the playing apparatus 14, the playing apparatus 14 sends initial signal to the control unit 12. And when the patient turns off the playing apparatus 14, the playing apparatus 14 sends end signal to the control unit 12. According to the initial signal and the end signal, the control unit 12 can calculate an exercise time (or duration) of the patient.

The heart rate of the patient can be inputted into the playing apparatus 14. The heart rate monitor 15 may connect to the playing apparatus 14 electronically; however, it is not used to limit the present invention. The data of the heart rate can be inputted by manual, instead. Furthermore, the patient can input his/her dyspnea rating data (will be described more detail in the following) into the playing apparatus 14. Similarly, the playing apparatus 14 can send the exercise status data (i.e. the inputted data) to the control unit 12.

The control unit 12 can further control all the exercise status data to be stored into the exercise status database 13, which can be a medical history of the patient for doctor's reference.

The playing apparatus 14 may be a cell-phone, a MP3 player, a Walkman, or the like that having a receiver thereon. The control unit 12 can use communication technology such as GSM, GPRS, or the like to transmit one or more instructions to the playing apparatus 14. Alternatively, as shown in FIG. 1B, the playing apparatus 14 may be a user wireless transceiver 141 for receiving instruction(s) from the control unit 12 through a system transceiver 142. The system transceiver 142 can be used for receiving and/or transmitting the inputted data from the user wireless transceiver 141 to the control unit 12. The communication of, for example, the RF or Bluetooth technology can be used for the user wireless transceiver 141 to transmit the exercise status data to the system transceiver 142. Alternatively, the inputted data can be transmitted to a PC (not shown) from the user wireless transceiver 141 via WLAN. The communication technology is well known to those people skilled in the art, so it is not required to describe in detail.

The initial physical status database 11, the control unit 12, and the exercise status database 13 can be integrated on an Internet platform 10. Thus, if it is using a GPRS cell-phone as the playing apparatus 14, all data in the GPRS cell-phone can be sent to the Internet platform 10 via wireless communication. Alternatively, if it is using the user wireless transceiver 141 as the playing apparatus 14, all data in the user wireless transceiver 141 can be sent to the Internet platform 10 through the system transceiver 142 or the PC via WLAN.

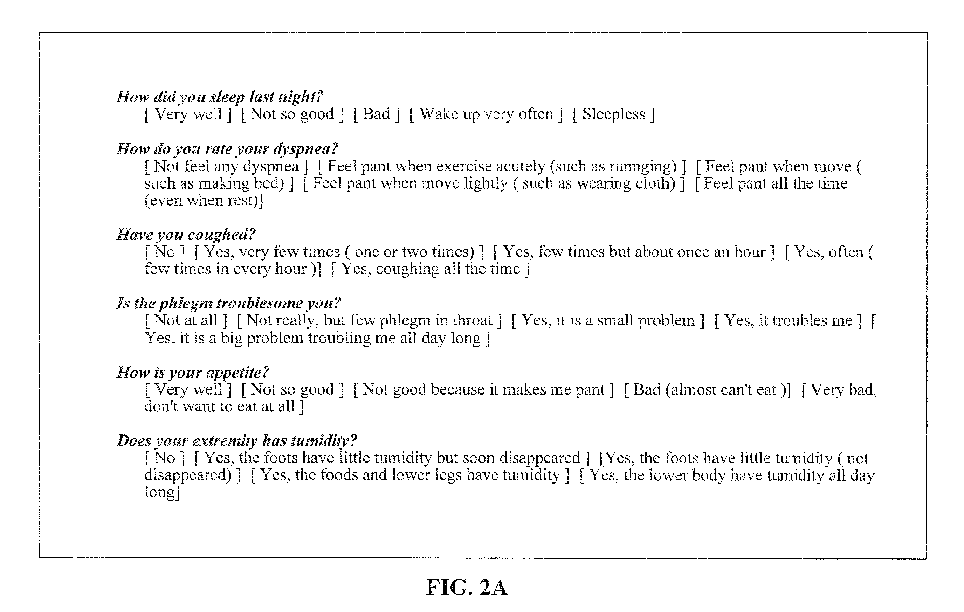

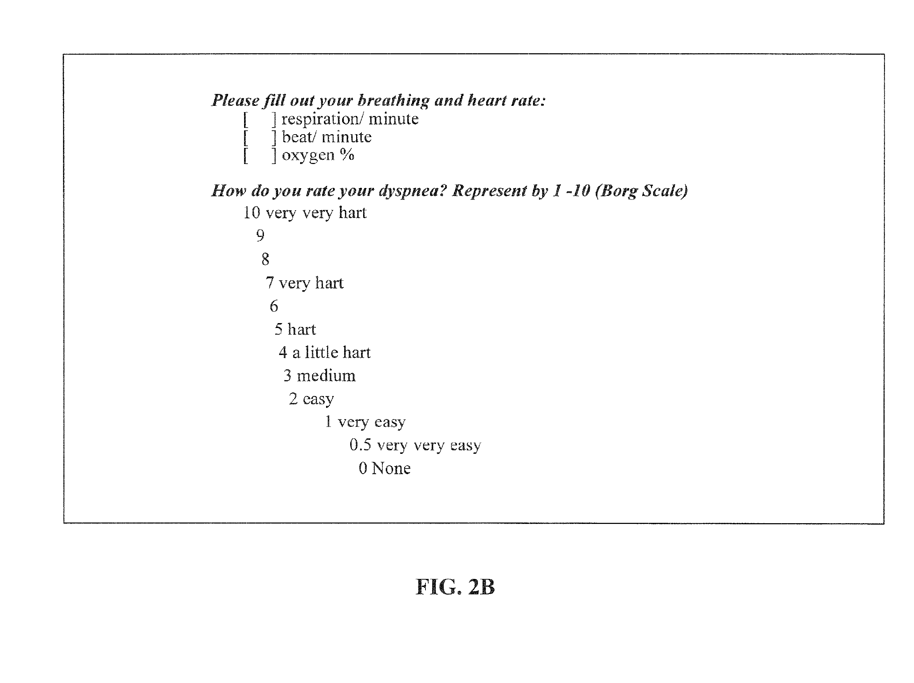

In addition, there are some other factors that may influence the exercise. The dyspnea rating of the patient can be divided 1-10 degree according to the BORG SCALE. The patient can input his/her exercise status data by filling one or more surveys displayed on a screen 140 of the playing apparatus 14. The surveys, as shown in FIG. 2A and FIG. 2B, can be stored in the playing apparatus for the patient to fill before and/or after exercising. The exercise status data can be obtained and transmitted to the control unit 12 from the playing apparatus 14, and can be stored in the exercise status database 13.

If the patient keeps endurance exercise at anywhere he/she wanted regularly, his/her intensity of exercise can be increased. When the patient has better intensity of exercise, the tempo should be a little bit quicker accordingly. According to the exercise status data (including such as the heart rate, dyspnea rating, and/or the exercise time (or duration)) stored in exercise status database 13, the control unit 12 can calculate for a proper intensity of exercise for the patient. The control unit 12, therefore, provides a proper music instruction to the playing apparatus 14 for playing with a proper tempo. Then, the patient can exercise following the proper tempo when playing the playing apparatus 14. In other words, the proper music with the proper tempo can be automatically selected from the playing apparatus 14. The patient needs only to turn on the playing apparatus 14. The proper tempo, for example, can be same, such as 5 beats more, or 5 beats less than the one earlier day. That means the basic tempo music may be same as the proper tempo music. The tempo for the patient to exercise is accordance with the exercise status data. According to the doctor's diagnosing, so the basic tempo, the increment or decrement of the differential tempo (such as 5 beats more or less), or the formula of the tempo should be set by the doctor.

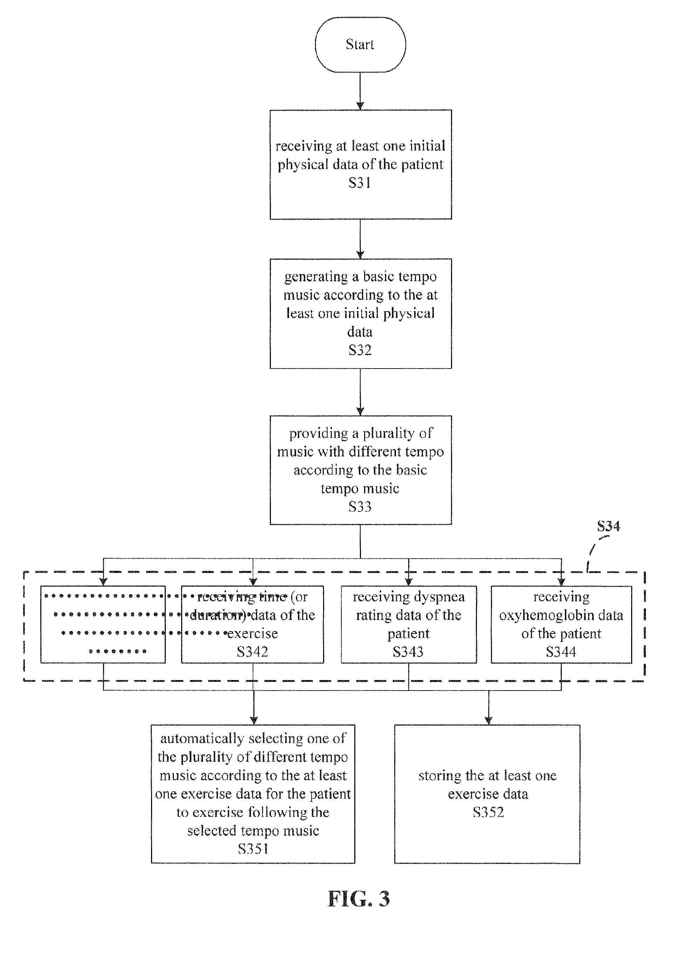

In addition, a method for home-based exercise training guided by automatically assessment and selecting music is provided in accordance with the present invention. The method of automatically selecting music is adopted to selectively provide proper tempo music to a patient without any supervision, wherein the proper tempo music is used for the patient to exercise according to the tempo of the proper tempo music. Please refer to FIG. 3. The method comprises following steps S31-S35. It should be understood that the steps should not be limited for its sequence.

Step S31: receiving at least one initial physical data of the patient. The initial physical data of the patient has described as above of testing in the hospital, for example.

Step S32: generating a basic tempo music according to the at least one initial physical data. As described in above, the basic tempo can be set in accordance with the FORMULA 1 for the patient to exercise following the tempo of the basic tempo music.

Step S33: providing a plurality of music with different tempo according to the basic tempo music. Between any two-tempo music, it can have the same or not the same beat differentials.

Step S34: receiving at least one exercise data of the patient including an exercise time (or duration) of the patient exercising following the basic tempo. As described above, when the patient follows the tempo to walk, the exercise data can be obtained. Receiving the exercise data comprises heart rate S341, time (or duration) of the exercise S342, dyspnea rating S343, and oxyhemoglobin in blood S344.

Step S351: automatically selecting one of the plurality of different tempo music according to the at least one exercise data for the patient to exercise following the selected tempo music. As described above, the proper tempo music will be selected automatically from the playing apparatus 14 (as shown in FIG. 1A).

Preferably, the method of this invention may further comprise the step of storing the at least one exercise data (S352). The exercise data can be used as historical status of the patient for doctors' reference.

According to the above system and method, an experiment has been obtained as following TABLE 2 and TABLE 3 and description, wherein the experiment group (14 persons) used the present invention and the control group (20 persons) did not.

**TABLE 2 (Baseline Characteristics)**

| | Experiment (N = 14) | Control (N = 20) | P-Value |
|---|---|---|---|
| Age, mean±SE yr | 69.7 ±1.9 | 72.2 ± 1.5 | 0.297 |
| Male sex, No. (%) | 14 (100%) | 20 (100%) | 1.000 |
| Body Mass Index, mean±SE | 24.1 ± 0.8 | 23.5 ± 0.9 | 0.649 |
| Short Form (SF)-12, median(min~max) | 31.0(21~39) | 30.0(26~35) | 0.832 |
| Distance (ISWT), mean±SE | 281.4 ± 30.6 | 260.0 ± 18.7 | 0.532 |
| FVC, mean±SE | 1.72 ± 0.09 | 2.04 ± 0.15 | 0.126 |
| FEV1 (L), mean±SE | 0.96 ± 0.09 | 1.02 ± 0.07 | 0.612 |
| FEV1, (% predicted), mean±SE | 43.8 ± 4.8 | 46.3 ± 2.8 | 0.635 |
| FEV1/FVC (%), mean±SE | 55.6 ± 3.9 | 51.6 ± 2.5 | 0.374 |
| IC (L), pre-ISWT, mean±SE | 1.51 ± 0.08 | 1.72 ± 0.14 | 0.239 |
| IC (L), post-ISWT, mean±SE | 1.22 ± 0.08 | 1.38 ± 0.13 | 0.334 |
| $\Delta$IC (pre-post ISWT), mean±SE | 0.29 ± 0.02 | 0.34 ± 0.03 | 0.143 |
| (ISWT: incremental shuttle walk test) (FEV1: Forced Expiratory Volume 1 second) (FVC: Forced Vital Capacity) (IC: inspiratory capacity) | | | |

**TABLE 3 (Exercise tolerance and symptom scores after 12-week endurance exercise training)**

| | Experiment | | | Control | | |
|---|---|---|---|---|---|---|
| | Baseline (N = 14) | 3 Months later (N = 12*) | P-value | Baseline (N = 20) | 3 Months later (N=16**) | P-value |
| Distance (ISWT),M | 281.4 ± 30.6 | 353.3 ±37.9 | <0.01 | 260.0 ± 18.7 | 251.9 ±21.2 | 0.223 |
| FEV1 (L) | 0.96 ± 0.09 | 0.97 ± 0.11 | 0.838 | 1.02 ± 0.07 | 0.92 ± 0.07 | 0.287 |
| FEV1 (% predicted) | 43.8 ± 4.8 | 44.9 ± 6.2 | 0.829 | 46.3 ± 2.8 | 40.4 ± 2.4 | 0.238 |

(continued)

| | Experiment | | | Control | | |
|---|---|---|---|---|---|---|
| | Baseline (N = 14) | 3 Months later (N = 12*) | P-value | Baseline (N = 20) | 3 Months later (N=16**) | P-value |
| Duration, EWT (sec) | 1552 ± 338 | 2488 ± 388 | <0.01 | - | - | - |
| Symptoms scores | 4.5 (1~5) | 1.0 (0~4) | <0.01 | | | |
| (EWT: Endurance walking test) (* Withdrawal of 2 patients due to inaccessible; ** 4 acute exacerbation leading to 2) | | | | | | |

From the comparison of TABLE 2 and TABLE 3, it is obvious that exercise tolerance improved after 12-week home-based endurance exercise training according to the present invention.

According to the method and the system of the present invention, the patient can operate (play) the playing apparatus 14 (as shown in FIG. 1A) for home-based exercise training guided by automatically assessment and selecting music. Therefore, the patient needs not to go to the hospital for such training, and the patient may increase his/her willing to be trained. Furthermore, the doctor or the hospital can use the exercise data stored in the exercise status database. Thus, the doctor may understand the change of the symptom of his/her patient for providing more accuracy prescription. The patient can become healthier.

Those skilled in the art will readily observe that numerous modifications and alterations of the device and method may be made while retaining the teachings of the invention. Accordingly, the above disclosure should be construed as limited only by the metes and bounds of the appended claims.

### Claims

1. A method for home-based exercise training guided by automatically assessment and selecting music, the method comprising:

   receiving at least one initial physical data of a patient;
   generating a basic tempo music according to the at least one initial physical data for the patient to exercise following the basic tempo of the basic tempo music;
   providing a plurality of music with different tempo according to the basic tempo music;
   receiving at least one exercise data of the patient including an exercise time or duration of the patient exercising following the basic tempo; and

   selecting one of the plurality of music according to the at least one exercise data for the patient to exercise following the tempo of the selected music.

2. The method of Claim 1, further comprising storing the at least one exercise data.

3. The method of Claim 1, further comprising receiving initial signal and end signal for calculating the exercise duration of the patient.

4. A system for home-based exercise training guided by automatically assessment and selecting music for a patient, the system comprising:

   an exercise status database storing at least one exercise data of the patient;
   a control unit connected with the exercise status database for selectively providing a proper tempo music instruction based on the at least one exercise data; and
   a playing apparatus stored with the a plurality of music with different tempo, the playing apparatus receiving the proper tempo music instruction to play one of the plurality of music for the patient to exercise following the proper tempo of the selected music;
   wherein the playing apparatus can provide and transmit the at least one exercise data comprising an exercise time or duration of the patient to the control unit.

**5.** The system of Claim 4, further comprising an initial physical status database connected with the control unit for storing at least one initial physical status data of the patient;

wherein the control unit provide a basic tempo music instruction to the playing apparatus according to the at least one initial physical status data for the playing apparatus to selectively play a basic tempo music of one of the plurality of music, and the at least one exercise data comprising an exercise duration of exercising following the basic tempo music.

**6.** The system of Claim 4, wherein the playing apparatus is capable of sending initial signal and end signal for calculating the exercise duration of the patient.

**7.** The system of Claim 4, further comprising a heart rate monitor for obtaining a heart rate data of beginning or ending of the exercise;

wherein the at least one exercise data further comprises the heart rate data or a dyspnea rating data.

**8.** The system of Claim 7, further comprising an oximeter for obtaining an oxyhemoglobin and deoxygenated hemoglobin data at any time during exercising or beginning of the exercise.

**9.** The system of Claim 8, wherein the playing apparatus further comprises a display screen for displaying at least one survey to be filled for the heart rate data, the dyspnea rating data, or the oxyhemoglobin data of the patient.

**10.** The system of Claim 4, further comprising a system transceiver for receiving the at least one exercise data transmitted from the playing apparatus and forwarding to the control unit.

**Amended claims in accordance with Rule 137(2) EPC.**

**1.** A computer-implemented method of guiding a patient for home-based exercise training, the method comprising:

receiving (S31) at least one initial physical status data of the patient;
generating (S32) a basic tempo melody having a basic tempo corresponding to the at least one initial physical status data such that the patient may exercise following the basic tempo when hearing the basic tempo melody;
providing (S33) a plurality of melodies with different tempo compared to the basic tempo;
receiving (S34) at least one exercise data of the patient including an exercise time or duration for the patient; and
selecting (S351) one of the plurality of melodies according to the at least one exercise data for the patient such that the patient may exercise following the tempo of the selected melody when hearing the selected melody.

**2.** The method of claim 1, further comprising storing (S352) the at least one exercise data.

**3.** The method of claim 1, further comprising receiving a start signal and a stop signal for calculating the exercise duration for the patient.

**4.** A computer-implemented system (1a, 1b) for guiding a patient for home-based exercise training, the system (1a, 1b) comprising:

an exercise status database (13) storing at least one exercise data of the patient;
a control unit (12) connected with the exercise status database (13) for selectively providing a proper tempo melody instruction based on the at least one exercise data;
and
a playing apparatus (14) having stored therein a plurality of melodies with different tempo, the playing apparatus (14) receiving the proper tempo melody instruction to play one of the plurality of melodies such that the patient may exercise following the proper tempo of the selected melody when hearing the selected melody;

wherein the playing apparatus (14) can provide and transmit the at least one exercise data comprising an exercise time or duration of the patient to the control unit (12).

**5.** The system (1a, 1b) of claim 4, further comprising an initial physical status database (11) connected with the control unit (12) for storing at least one initial physical status data of the patient;
wherein the control unit (12) can provide a basic tempo melody instruction to the playing apparatus (14) corresponding to the at least one initial physical status data for the playing apparatus (14) to selectively play a basic tempo melody of one of the plurality of melodies, and the at least one exercise data comprising an exercise duration of exercising following the basic tempo melody.

**6.** The system (1a, 1b) of claim 4, wherein the playing apparatus (14) is capable of sending a start signal and a stop signal for calculating the exercise duration for the patient.

**7.** The system (1a, 1b) of claim 4, further comprising a heart rate monitor (15) for obtaining a heart rate data of the patient's heart indicating the physical status of the patient according to which the exercise of the patient may be started or has to be stopped;
wherein the at least one exercise data further comprises the heart rate data of the patient or a dyspnea rating data of the patient.

**8.** The system (1a, 1b) of claim 7, further comprising an oximeter (16) for obtaining an oxyhemoglobin data of the patient at any time during the patient's exercising or at beginning of the patient's exercise, the oxyhemoglobin data indicating an oxygenated or deoxygenated hemoglobin status of the patient.

**9.** The system (1a, 1b) of claim 8, wherein the playing apparatus (14) further comprises a display screen (140) for displaying at least one survey to be filled for the heart rate data of the patient, the dyspnea rating data of the patient, or the oxyhemoglobin data of the patient.

**10.** The system (1a, 1b) of claim 4, further comprising a system transceiver (142) for receiving and forwarding the at least one exercise data transmitted from the playing apparatus (14) to the control unit (12).

**FIG. 1A**

**FIG. 1B**

*How did you sleep last night?*
[ Very well ] [ Not so good ] [ Bad ] [ Wake up very often ] [ Sleepless ]

*How do you rate your dyspnea?*
[ Not feel any dyspnea ] [ Feel pant when exercise acutely (such as runnging) ] [ Feel pant when move ( such as making bed) ] [ Feel pant when move lightly ( such as wearing cloth) ] [ Feel pant all the time (even when rest)]

*Have you coughed?*
[ No ] [ Yes, very few times ( one or two times) ] [ Yes, few times but about once an hour ] [ Yes, often ( few times in every hour )] [ Yes, coughing all the time ]

*Is the phlegm troublesome you?*
[ Not at all ] [ Not really, but few phlegm in throat ] [ Yes, it is a small problem ] [ Yes, it troubles me ] [ Yes, it is a big problem troubling me all day long ]

*How is your appetite?*
[ Very well ] [ Not so good ] [ Not good because it makes me pant ] [ Bad (almost can't eat )] [ Very bad, don't want to eat at all ]

*Does your extremity has tumidity?*
[ No ] [ Yes, the foots have little tumidity but soon disappeared ] [Yes, the foots have little tumidity ( not disappeared) ] [ Yes, the foods and lower legs have tumidity ] [ Yes, the lower body have tumidity all day long]

FIG. 2A

*Please fill out your breathing and heart rate:*
[     ] respiration/ minute
[     ] beat/ minute
[     ] oxygen %

*How do you rate your dyspnea? Represent by 1 -10 (Borg Scale)*
10 very very hart
9
8
7 very hart
6
5 hart
4 a little hart
3 medium
2 easy
1 very easy
0.5 very very easy
0 None

**FIG. 2B**

**FIG. 3**

**European Patent Office**

**EUROPEAN SEARCH REPORT**

Application Number

EP 07 10 8683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 128 358 A (IN2SPORTS B V [NL]) 29 August 2001 (2001-08-29) * abstract * * paragraph [0003] * * paragraph [0005] * * paragraph [0010] - paragraph [0011] * * paragraph [0019] * * paragraph [0021] - paragraph [0022] * * paragraph [0024] * * paragraph [0027] * * figures 1,2 * ----- | 1-10 | INV. G06F17/30 |
| X | EP 1 705 588 A (SONY CORP [JP]) 27 September 2006 (2006-09-27) * the whole document * ----- | 1-10 | |
| | | | TECHNICAL FIELDS SEARCHED (IPC) |
| | | | G06F |

The present search report has been drawn up for all claims

| Place of search | Date of completion of the search | Examiner |
|---|---|---|
| Munich | 17 September 2007 | Konak, Eyüp |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 07 10 8683

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2007

| Patent document cited in search report | | Publication date | Patent family member(s) | Publication date |
|---|---|---|---|---|
| EP 1128358 | A | 29-08-2001 | NONE | |
| EP 1705588 | A | 27-09-2006 | JP    2006302490 A | 02-11-2006 |
| | | | KR    20060103161 A | 28-09-2006 |
| | | | US    2006243120 A1 | 02-11-2006 |

EPO FORM P0459

For more details about this annex : see Official Journal of the European Patent Office, No. 12/82